# EUROPEAN PATENT APPLICATION

(11) **EP 4 407 778 A1**
(43) Date of publication of application: **31.07.2024**
(21) Application number: 23749350.7
(22) Date of filing: 01.02.2023
(51) Int. Cl.: H01M 50/517, H01M 50/507, H01M 50/519, H01M 50/569

(54) **SAMPLING STRUCTURE WITH CIRCUIT BOARD, AND BATTERY MODULE, BATTERY PACK, AND ELECTRIC APPARATUS**

(30) Priority: 07.02.2022 CN 202220260030 U
(71) Applicant: Contemporary Amperex Technology Co., Limited, Ningde, Fujian 352100 (CN)
(72) Inventor: GAN, Weifeng, Ningde, Fujian 352100 (CN); WANG, Yu, Ningde, Fujian 352100 (CN); WANG, Chong, Ningde, Fujian 352100 (CN)
(74) Representative: Ziebig Hengelhaupt Intellectual Property Attorneys Patentanwaltskanzlei PartGmbB
(86) International application number: PCT/CN2023/074119
(87) International publication number: WO 2023/147771

(57) **Abstract**

This application discloses a circuit board sampling structure (1), a battery module (10), a battery pack (100), and an electric device (1000). The circuit board sampling structure (1) includes: a circuit board (11), busbars (12), and connectors (13). An edge of the circuit board (11) is extended with connecting arms (111), the busbar (12) is provided with at least one plug hole (121), and a side of the connector (13) is provided with at least one plug part (131), where the plug part (131) is plugged in the plug hole (121), and an end of the connecting arm (111) away from the circuit board (11) is clamped between the connector (13) and the busbar (12). This can improve the assembly efficiency of the circuit board (11) and the busbars (12) and can reduce the production cost of the circuit board sampling structure (1).

## Description

### CROSS-REFERENCE TO RELATED APPLICATIONS

This application claims priority to Chinese Patent Application No. 202220260030.6, filed with the China National Intellectual Property Administration on February 7, 2022 and entitled "CIRCUIT BOARD SAMPLING STRUCTURE, BATTERY MODULE, BATTERY PACK, AND ELECTRIC DEVICE", which is incorporated herein by reference in its entirety.

### TECHNICAL FIELD

Embodiments of this application relate to the battery field, and in particular, to a circuit board sampling structure, a battery module, a battery pack, and an electric device.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery module technology is an important factor in connection with their development.

Currently, the assembly efficiency of battery modules is low.

### SUMMARY

In view of the foregoing problems, this application provides a circuit board sampling structure, a battery module, a battery pack, and an electric device, so as to alleviate the problem of low assembly efficiency of battery modules.

According to a first aspect, this application provides a circuit board sampling structure, where the circuit board sampling structure includes: a circuit board, busbars, and connectors. An edge of the circuit board is extended with connecting arms, the busbar is provided with at least one plug hole, and a side of the connector is provided with at least one plug part, where the plug part is plugged in the plug hole, and an end of the connecting arm away from the circuit board is clamped between the connector and the busbar.

In the technical solution in embodiments of this application, the connecting arm and the busbar can be pre-fixed before the electrical connection by using the connector, reducing the probability of relative movement during performing electrical connection between the connecting arm and the busbar, thereby improving the assembly efficiency between the circuit board and the busbar. In addition, when the end of the connecting arm away from the circuit board is clamped between the connector and the busbar, the connecting arm and the busbar are electrically connected, so that the connecting arm and the busbar can be electrically connected toout using a sampling connection piece, thereby improving the assembly efficiency and reducing the production cost of the circuit board sampling structure. In addition, the connector enables one end of the connecting arm away from the circuit board to be clamped between the connector and the busbar, thereby improving structural strength when the connecting arm and the busbar are connected.

In some embodiments, the plug part and the busbar are snap-fitted. The plug part and the busbar are snap-fitted, which can improve structural strength when the plug part and the busbar are connected, and reduce the probability of the connector detaching from the busbar.

In some embodiments, an end of the plug part away from the connector is bent with a hook portion, and the hook portion is hooked on the surface of the busbar away from the connecting arm. The hook portion is hooked on the surface of the busbar away from the connecting arm, which can reduce the possibility of the plug part detaching from the plug hole, and the connector is simple in structure and easy to prepare.

In some embodiments, there are multiple plug holes, one plug hole being plugged with at least one plug part. The multiple plug holes are provided to accommodate multiple plug parts, resulting in a relatively high structural strength when the connector and the busbar are connected.

In some embodiments, there are three plug holes, the three plug holes being distributed in a triangle. The three plug holes are arranged in a triangle, so that the end of the connecting arm away from the circuit board can be located between the three plug holes, thereby reducing the possibility that the end of the connecting arm away from the circuit board rotates relative to the busbar.

In some embodiments, the end of the connecting arm away from the circuit board is located in a zone defined by the multiple plug holes, and the edge of the connecting arm abuts against the plug part. This can reduce possibility that the end of the connecting arm away from the circuit board rotates relative to the busbar.

In some embodiments, the connecting arm and the busbar are welded. Welding can not only achieve an electrical connection between the connecting arm and the busbar, but also result in a relatively high structural strength when the connecting arm and the busbar are connected.

In some embodiments, at least a portion of the connecting arm is in a bent shape. At least a portion of the connecting arm is in a bent shape, so that when the circuit board sampling structure shakes, the bent portion of the connecting arm can deform, thereby reducing possibility of damage to the circuit board sampling structure caused by mutual pulling between the circuit board and the busbar.

In some embodiments, an edge of the circuit board is provided with notches, and the connecting arm extends from inside the notch to the outside of the notch. The provision of the notches can reduce material usage of the circuit board, thereby reducing the production cost of the circuit board sampling structure. The connecting arm extends from inside the notch to the outside of the notch, thereby reducing space occupation of the connecting arm.

In some embodiments, an inner wall forming the notch includes: a first inner wall, where the first inner wall is perpendicular to an extension direction of the edge, the connecting arm extends from the first inner wall, and the connecting arm bends in a direction perpendicular to the edge, where the bent connecting arm is in a bent shape. The first inner wall is perpendicular to the extension direction of the edge, and the connecting arm extends from the first inner wall and bends towards the direction perpendicular to the edge; that is, the bent connecting arm is parallel to the first inner wall, thereby improving the visual effect of the circuit board sampling structure.

According to a second aspect, this application provides a battery module, where the battery module includes battery cells and the circuit board sampling structure according to any one of the first aspect, and busbars of the circuit board sampling structure are connected to the battery cells. The battery cells are connected to the circuit board sampling structure, and the assembly efficiency of the circuit board sampling structure is improved, thereby improving the assembly efficiency of the battery module.

According to a third aspect, this application provides a battery pack, where the battery pack includes the battery modules according to the second aspect. The battery modules are provided in the battery pack, and the assembly efficiency of the battery module is improved, thereby improving the assembly efficiency of the battery pack.

According to a fourth aspect, this application provides an electric device, where the electric device includes the battery pack according to the third aspect. The battery pack is provided in the electric device, and the assembly efficiency of the battery pack is improved, thereby improving the assembly efficiency of the electric device.

The foregoing description is merely an overview of the technical solution of this application. For a clear understanding of the technical means in this application such that they can be implemented according to the content of the specification, and to make the above and other objectives, features and advantages of this application obvious and easy to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, like reference signs denote like components. In the accompanying drawings:
FIG. 1 is a schematic structural diagram (first perspective) of a circuit board sampling structure according to some embodiments of this application;
FIG. 2 is a schematic structural diagram (second perspective) of a circuit board sampling structure according to some embodiments of this application;
FIG. 3 is an enlarged schematic view (second perspective) of zone A of a circuit board sampling structure according to some embodiments of this application;
FIG. 4 is a schematic structural diagram (third perspective) of a circuit board sampling structure according to some embodiments of this application;
FIG. 5 is an enlarged schematic view (third perspective) of zone B of a circuit board sampling structure according to some embodiments of this application;
FIG. 6 is a schematic structural diagram (fourth perspective) of a circuit board sampling structure in an exploded state according to some embodiments of this application;
FIG. 7 is an enlarged schematic view (fourth perspective) of zone C of a circuit board sampling structure in an exploded state according to some embodiments of this application;
FIG. 8 is a schematic structural diagram of a battery module in an exploded state according to some embodiments of this application;
FIG. 9 is a schematic structural diagram of a battery pack according to some embodiments of this application; and
FIG. 10 is a schematic structural diagram of an electric device according to some embodiments of this application.

Reference signs in specific embodiments are as follows:
1. circuit board sampling structure, 11. circuit board, 111. connecting arm, 112. notch, 1121. first inner wall, 12. busbar, 121. plug hole, 13. connector, 131. plug part, 1311. hook portion;
2. battery cell;
10. battery module;
20. second housing;
100. battery pack; and
1000. electric device.

### DESCRIPTION OF EMBODIMENTS

The following describes in detail the embodiments of technical solutions of this application with reference to the accompanying drawings. The following embodiments are merely intended for a clear description of the technical solutions of this application and therefore are merely used as examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, particular sequence or primary-secondary relationship of the technical features indicated. In the description of the embodiments of this application, "multiple" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the description of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for the ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from a perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for the traction batteries are also expanding.

The inventors have noted that a battery module is provided with busbars and a circuit board, where the busbars are configured to connect battery cells, connecting arms of the circuit board are connected to the busbars, and the circuit board can sample and detect information such as voltage and temperature on the battery cells connected to the busbars via the connecting arm and the busbars. However, when the connecting arms and the busbars of the circuit board are electrically connected, relative displacement therebetween is easy to occur, causing low assembly efficiency of the battery module. In this case, being electrically connected means that the transmission of electrical signals can be performed between the connecting arms and the busbars.

In order to alleviate the problem of low assembly efficiency of the battery module, the applicant has found through research that before connections of the connecting arms with the busbars, the connecting arms can be limited at positions on the busbars at which corresponding connecting arms are connected. In this way, when the connecting arms and the busbars are in electrical connection, relative displacement therebetween does not occur, thereby improving the assembly efficiency of the battery module.

In view of this, in order to alleviate the problem of low assembly efficiency of the battery module, the inventors have designed, through deep research, a circuit board sampling structure. The connectors are used to limit the connecting arms at positions on the busbars at which corresponding connecting arms are connected, so that during electrical connection of the connecting arms and the busbars, when relative displacement therebetween occurs, the connector can limit the movement of the connecting arm relative to the busbar.

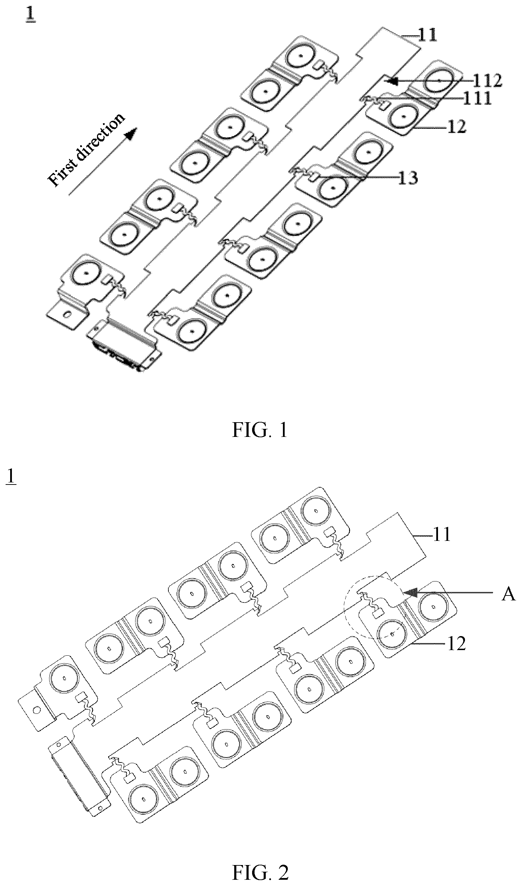

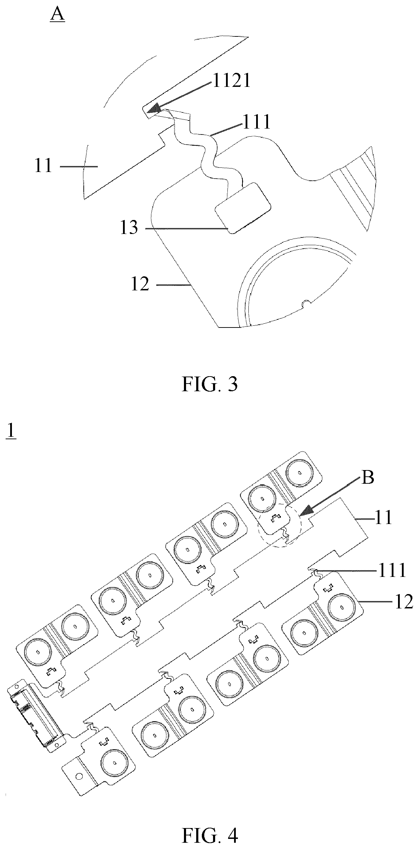

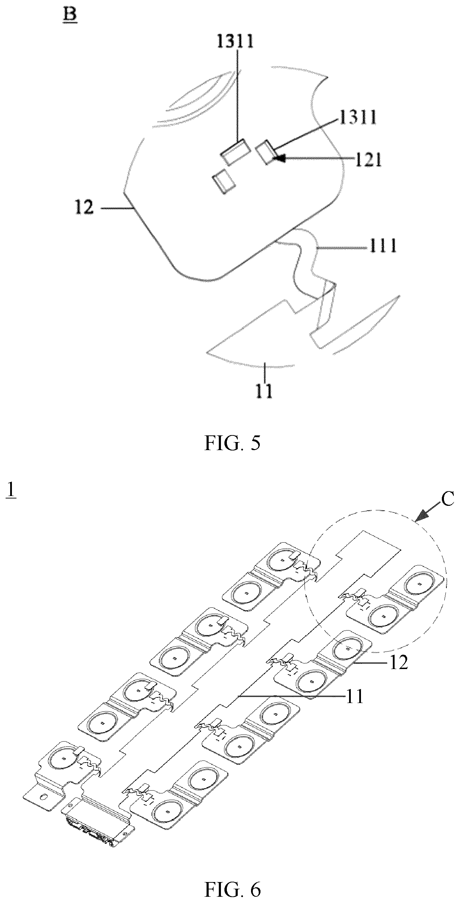

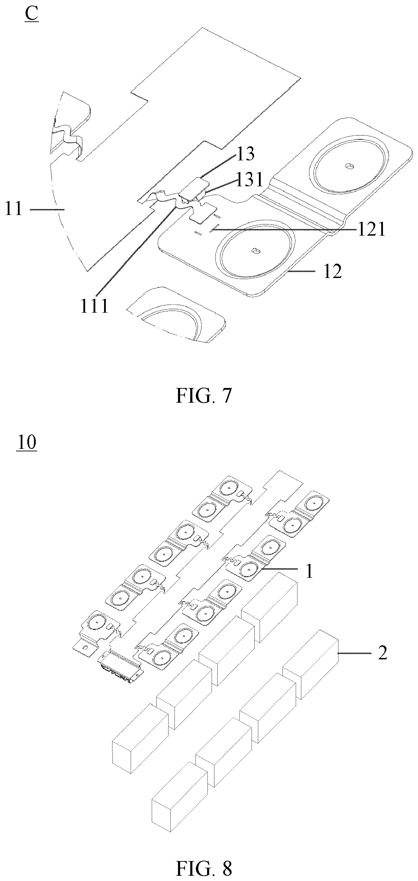

According to some embodiments in this application, referring to FIG. 1 and with reference to FIG. 2 to FIG. 8, FIG. 1 is a schematic structural diagram (first perspective) of a circuit board sampling structure according to some embodiments of this application, FIG. 2 is a schematic structural diagram (second perspective) of a circuit board sampling structure according to some embodiments of this application, FIG. 3 is an enlarged schematic view (second perspective) of zone A of a circuit board sampling structure according to some embodiments of this application, FIG. 4 is a schematic structural diagram (third perspective) of a circuit board sampling structure according to some embodiments of this application, FIG. 5 is an enlarged schematic view (third perspective) of zone B of a circuit board sampling structure according to some embodiments of this application, FIG. 6 is a schematic structural diagram (fourth perspective) of a circuit board sampling structure in an exploded state according to some embodiments of this application, FIG. 7 is an enlarged schematic view (fourth perspective) of zone C of a circuit board sampling structure in an exploded state according to some embodiments of this application, and FIG. 8 is a schematic structural diagram of a battery module in an exploded state according to some embodiments of this application. This application provides a circuit board sampling structure 1. The circuit board sampling structure 1 includes a circuit board 11, busbars 12, and connectors 13. An edge of the circuit board 11 is extended with connecting arms 111, the busbar 12 is provided with at least one plug hole 121, and a side of the connector 13 is provided with at least one plug part 131, where the plug part 131 is plugged in the plug hole 121, and an end of the connecting arm 111 away from the circuit board 11 is clamped between the connector 13 and the busbar 12.

A sampling and detection circuit is provided in the circuit board 11, where the sampling and detection circuit has sampling and detection functions, such as voltage sampling and temperature sampling.

The circuit board 11 may be in a linear shape extending along the first direction as shown in FIG. 1, may be in a crossed shape, or may be in other shapes. This is not specifically limited herein.

An edge of the circuit board 11 is extended with connecting arms 111, where a circuit is provided in the connecting arm 111, and the circuit is connected to the sampling and detection circuit in the circuit board 11. The edge of the circuit board 11 may be the edge extending along the first direction as shown in FIG. 1, or may be another edge. The foregoing circuit board 11 may have multiple connecting arms 111 extending from one edge or may have multiple connecting arms 111 extending from multiple edges.

The busbar 12 is used for implementing series or parallel connection between multiple battery cells 2 in the battery module 10.

The busbar 12 is provided with at least one plug hole 121, where a shape of the plug hole 121 may be rectangle, triangle, trapezoid, or other shapes.

The plug part 131 of the connector 13 is used for inserting into the plug hole 121 of the busbar 12, so that an end of the connecting arm 111 away from the circuit board 11 can be clamped between the connector 13 and the busbar 12, thereby reducing probability of relative replacement between the connecting arm 111 and the busbar 12 during connection.

The connector 13 and the plug part 131 on one side thereof may be metal sheet made of aluminum, copper, nickel, and the like. This can improve strength of the connector 13 and the plug part 131 on one side thereof, so as to reduce probability of cracks of the connector 13 and the plug part 131.

The plug part 131 may extend obliquely from one side of the connector 13, or may extend vertically.

When the end of the connecting arm 111 away from the circuit board 11 is clamped between the connector 13 and the busbar 12, the connecting arm 111 and the busbar 12 are electrically connected. For example, the connecting arm 111 and the busbar 12 each are provided with an electrical contact point on their respective surfaces in contact with each other. When one end of the connecting arm 111 away from the circuit board 11 is clamped between the connector 13 and the busbar 12, the electrical contact point of the connecting arm 111 contacts the electrical contact point of the busbar 12, so as to implement electrical connection between the connecting arm 111 and the busbar 12. For another example, when one end of the connecting arm 111 away from the circuit board 11 is clamped between the connector 13 and the busbar 12, the connecting arm 111 is welded to the busbar 12 to implement electrical connection between the connecting arm 111 and the busbar 12.

In one embodiment, as shown in FIG. 1, the circuit board 11 of the circuit board sampling structure 1 are provided with four connecting arms 111 on both sides in the first direction, where each connecting arm 111 is clamped between one connector 13 and one busbar 12 at an end away from the circuit board 11. In implementation, a part of the plug part 131 may be first inserted into the plug hole 121, the end of the connecting arm 111 away from the end of the circuit board 11 is disposed between the connector 13 and the busbar 12, the end edge of the connecting arm 111 away from the circuit board 11 abuts against the plug part 131, and then insertion of the plug part 131 proceeds until two end surfaces of the connecting arm 111 away from the circuit board 11 and facing away from each other are each fitted against the connector 13 and the busbar 12. When each busbar 12 is connected to a battery cell 2, the circuit board 11 is connected to eight battery cells 2, where the eight battery cells 2 are connected in series or parallel with each other, and the sampling and detection circuit in the circuit board 11 can sample and detect information such as voltage and temperature of the battery cells 2.

In this embodiment, the connecting arm 111 and the busbar 12 can be pre-fixed before the electrical connection by using the connector 13, reducing the probability of relative movement during performing electrical connection between the connecting arm 111 and the busbar 12, thereby improving the assembly efficiency between the circuit board 11 and the busbar 12. In addition, when the end of the connecting arm 111 away from the circuit board 11 is clamped between the connector 13 and the busbar 12, the connecting arm 111 and the busbar 12 are electrically connected, so that the connecting arm 111 and the busbar 12 can be electrically connected toout using a sampling connection piece, thereby improving the assembly efficiency and reducing the production cost of the circuit board sampling structure 1. In addition, the connector 13 enables one end of the connecting arm 111 away from the circuit board 11 to be clamped between the connector 13 and the busbar 12, thereby improving structural strength when the connecting arm 111 and the busbar 12 are connected.

According to some embodiments in this application, referring to FIG. 1 to FIG. 7, the plug part 131 and the busbar 12 are snap-fitted.

The plug part 131 and the busbar 12 are snap-fitted, that is, the plug part 131 is provided with a first snapping portion adapted to the first snapping portion, the busbar 12 is provided with a second snapping portion. A snap-fit of the first snapping portion and the second snapping portion can indicate that the plug part 131 and the busbar 12 are snap-fitted.

The first snapping portion and the second snapping portion can not only cooperate with each other to snap-fit, but also can separate from each other to separate the plug part 131 from the busbar 12.

In this embodiment, the plug part 131 and the busbar 12 are snap-fitted, so as to improve structural strength when the plug part 131 and the busbar 12 are connected, and reduce the probability of the connector 13 detaching from the busbar 12.

According to some embodiments in this application, referring to FIG. 4 and FIG. 5, an end of the plug part 131 away from the connector 13 is bent with a hook portion 1311, where the hook portion 1311 is hooked on the surface of the busbar 12 away from connecting arm 111.

An end of the plug part 131 away from the connector 13 is bent with a hook portion 1311, where the hook portion 1311 is hooked on the surface of the busbar 12 away from connecting arm 111, that is, the plug part 131 can penetrate through the plug hole 121 on the surface of one side of the busbar 12 and make the hook portion 1311 be located on another side of the busbar 12, where the hook portion 1311 is hooked on the surface of the busbar 12 away from connecting arm 111. Herein, a distance between the hook portion 1311 and the connector 13 is greater than or equal to thickness of the busbar 12. In order to improve structural strength when the plug part 131 and the busbar 12 are connected, the distance between the hook portion 1311 and the connector 13 is equal to thickness of the busbar 12.

The hook portion 1311 may be one portion of the plug part 131. For example, the plug part 131 extends vertically along one side of the connector 13, and the hook portion 1311 is formed by bending an end of the plug part 131 away from the connector 13. In implementation, a side of the busbar 12 away from the connecting arm 111 is disposed with an assembly tool, where surface of the assembly tool facing the busbar 12 is recessed with a recess portion, and the end of the plug part 131 away from the connector 13 passes through the plug hole 121 on one side of the busbar 12 and is located on another side of the busbar 12, and bends against the recess portion of the assembly tool, so as to form the hook portion 1311. Herein, the recess portion may be a recessed arc surface.

In this embodiment, the hook portion 1311 is hooked on the surface of the busbar 12 away from the connecting arm 111, thereby reducing the possibility of the plug part 131 detaching from the plug hole 121, and the connector 13 is simple in structure and easy to prepare.

According to some embodiments in this application, referring to FIG. 5 and FIG. 7, there are multiple plug holes 121, where one plug hole 121 is inserted with at least one plug part 131.

The plug hole 121 is provided in multiple, and the multiple plug holes 121 may include two plug holes 121 spaced apart or two plug holes 121 arranged closely.

One plug hole 121 is inserted with at least one plug part 131, meaning that one plug hole 121 is inserted with one plug part 131 or multiple plug parts 131.

In this embodiment, the multiple plug holes 121 are provided to accommodate multiple plug parts 131, resulting in a relatively high structural strength when the connector 13 and the busbar 12 are connected.

According to some embodiments in this application, referring to FIG. 5 and FIG. 7, there are three plug holes 121, where the three plug holes 121 are arranged in a triangle.

During use, the end of the connecting arm 111 away from the circuit board 11 can be located between the three plug holes 121.

In this embodiment, the three plug holes 121 are arranged in a triangle, so that the end of the connecting arm 111 away from the circuit board 11 can be located between the three plug holes 121, thereby reducing the possibility that the end of the connecting arm 111 away from the circuit board 11 rotates relative to the busbar 12.

According to some embodiments in this application, referring to FIG. 7, the end of the connecting arm 111 away from the circuit board 11 is located in a zone defined by the multiple plug holes 121, and the end of the connecting arm 111 abuts against the plug part 131, thereby reducing the possibility that the end of the connecting arm 111 away from the circuit board 11 rotates relative to the busbar 12.

According to some embodiments in this application, the connecting arm 111 and the busbar 12 are welded.

The connecting arm 111 and the busbar 12 may be laser welded or ultrasonic welded. When the connecting arm 111 and the busbar 12 are welded, the connecting arm 111 and the busbar 12 are electrically connected, so that the busbar 12, the connecting arm 111, and the circuit board 11 form a signal sampling circuit.

In this embodiment, welding can not only achieve an electrical connection between the connecting arm 111 and the busbar 12, but also result in a relatively high structural strength when the connecting arm 111 and the busbar 12 are connected.

According to some embodiments in this application, at least a portion of the connecting arm 111 is in a bent shape.

At least a portion of the connecting arm 111 is in a bent shape, meaning that the connecting arm 111 is entirely or locally bent.

At least a portion of the connecting arm 111 is in a bent shape, meaning that at least a portion of the connecting arm 111 is not straight. For example, a portion of the connecting arm 111 is in a fold-line shape. For another example, a portion of connecting arms 111 are in a wave shape.

Bent connecting arms 111 can deform, where deforming includes but is not limited to the following types: being partially prolonged, being partially shortened, and being partially bulged.

In this embodiment, at least a portion of connecting arm 111 is in a bent shape, so that when the circuit board sampling structure 1 shakes, the bent portion of the connecting arm 111 can deform, thereby reducing possibility of damage to the circuit board sampling structure 1 caused by mutual pulling between the circuit board 11 and the busbar 12.

According to some embodiments in this application, referring to FIG. 1 to FIG. 7, edges of the circuit board 11 are provided with notches 112, where the connecting arm 111 extends from inside the notch 112 to the outside of the notch 112.

The notches 112 can be formed by cutting the edge of the circuit board 11 or may be formed in other manners.

In this embodiment, the provision of the notches 112 can reduce material usage of the circuit board 11, thereby reducing the production cost of the circuit board sampling structure 1. The connecting arm 111 extends from inside the notch 112 to the outside of the notch 112, thereby reducing space occupation of the connecting arm 111.

According to some embodiments in this application, referring to FIG. 2 and FIG. 3, the notch 112 formed on the inner wall includes: a first inner wall 1121, where the first inner wall 1121 is perpendicular to an extension direction of the edge, the connecting arm 111 extends from the first inner wall 1121, and the connecting arm 111 bends in a direction perpendicular to the edge, the bent connecting arm 111 being in a bent shape.

For example, the notch 112 is provided on a first edge of the circuit board 11 extending along the first direction, where the first inner wall 1121 is perpendicular to the first edge, that is, the first inner wall 1121 is perpendicular to the first direction.

Herein, the connecting arm 111 may be a portion of the circuit board 11. For example, the circuit board 11 extends along the first direction, the circuit board 11 is provided with multiple zones on both sides along the first direction. Each zone is formed by a first zone line, a second zone line, a third zone line, and a portion of the edge, where the first zone line and the second zone line are both perpendicular to the first direction, and the connecting arm 111 connected to the circuit board 11 can be formed by cutting along the third zone line and the second zone line. The cutting of the third zone line and the second zone line can be implemented by stamping. Such manner makes the connection between the connecting arm 111 and the circuit board 11 natural, with a low possibility of breakage.

In this embodiment, the first inner wall 1121 is perpendicular to the extension direction of the edge, and the connecting arm 111 extends from the first inner wall 1121 and bends towards the direction perpendicular to the edge, that is, the bent connecting arm 111 is parallel to the first inner wall 1121, thereby improving a visual effect of the circuit board sampling structure 1.

According to some embodiments in this application, referring to FIG. 8, this application provides a battery module 10, where the battery module 10 includes battery cells 2 and the circuit board sampling structure 1 according to any one of the following solutions, where the busbars 12 of the circuit board sampling structure 1 are connected to the battery cells 2.

The battery cell 2 may be a secondary battery or a primary battery, a lithium-sulfur battery, a sodium-ion battery, or a magnesium-ion battery, without being limited thereto. The battery cell 2 may be cylindrical, flat, cuboid, or of other shapes.

In the battery module 10, there may be multiple battery cells 2, where the multiple battery cells 2 are electrically connected via the multiple busbars 12 of the circuit board sampling structure 1.

The battery module 10 can be used without limitation in vehicles, ships, aircraft, and other electric devices. A power supply system of the electric device can be formed by using the battery module 10.

In this embodiment, the battery cells 2 are connected to the circuit board sampling structure 1, and the assembly efficiency of the circuit board sampling structure 1 is improved, thereby improving the assembly efficiency of the battery module 10.

In some embodiments of this application, the battery module 10 may further include a first housing, where a cavity of the first housing is provided with the battery cells 2 and the circuit board sampling structure 1, thereby protecting the battery cells 2 and the circuit board sampling structure 1 via the first housing.

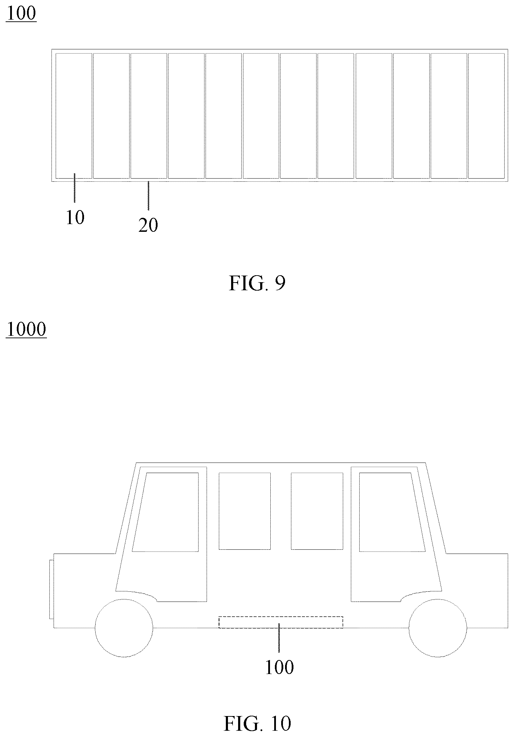

According to some embodiments in this application, referring to FIG. 9, this application further provides a battery pack 100, where the battery pack 100 includes the battery module 10 according to any one of the foregoing solutions.

The battery pack 100 can be used without limitation in vehicles, ships, aircraft, and other electric devices. A power supply system of the electric device can be formed by using the battery pack 100.

In this embodiment, the battery modules 10 are provided in the battery pack 100, and the assembly efficiency of the battery module 10 is improved, thereby improving the assembly efficiency of the battery pack 100.

In some embodiments of this application, referring to FIG. 9, the battery pack 100 may further include a second housing 20, where a cavity of the second housing 20 is provided with multiple battery modules 10.

According to some embodiments in this application, referring to FIG. 10, this application further provides an electric device 1000, where the electric device 1000 includes the battery pack 100 according to any one of the foregoing solutions.

The electric device 1000 may include but is not limited to a mobile phone, a tablet, a laptop, an electric toy, an electric tool, an electric scooter, an electric vehicle, a ship, a spacecraft, or the like. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In this embodiment, the battery pack 100 is provided in the electric device 1000, so that the improvement of assembly efficiency of the battery pack 100 can improve assembly efficiency of the electric device 1000.

In some embodiments of this application, referring to FIG. 10, the electric device 1000 is a vehicle, and the vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery pack 100 inside, where the battery pack 100 may be disposed at the bottom, front, or rear of the vehicle 1000. The battery pack 100 may be configured to power the vehicle 1000. For example, the battery pack 100 may be used as an operational power source for the vehicle 1000. The vehicle 1000 may further include a controller and a motor, where the controller is configured to control the battery pack 100 to supply power to the motor, for example, to satisfy power needs of start, navigation, and driving of the vehicle 1000.

In some embodiments of this application, the battery pack 100 can be used as not only the operational power source for the vehicle 1000 but also a driving power source for the vehicle 1000, replacing all or part of the fossil fuel or the natural gas to provide driving power for the vehicle 1000.

In a specific embodiment, referring to FIG. 1 to FIG. 7, a circuit board sampling structure 1 includes:
a circuit board 11, where the circuit board 11 is a rectangular board extending along a first direction, and four notches 112 are provided on both sides of the circuit board 11 in the first direction, and four connecting arms 111 corresponding to the four notches 112 are respectively provided, where the connecting arm 111 is bent in a direction perpendicular to the first direction and is in a bent shape after bending; and the connecting arm 111 is formed by stamping a portion of an edge of the circuit board 11;
eight busbars 12, where each busbar 12 is provided with three plug holes 121 arranged in a triangle; and
eight connectors 13, where each connector 13 is provided with three plug parts 131 arranged in a triangle on one side, the three plug parts 131 of one connector 13 are respectively inserted into the three plug holes 121 of one busbar 12, and the plug part 131 passed through the plug hole 121 is bent and forms a hook portion 1311, where the hook portion 1311 abuts against surface of the busbar 12 away from the connecting arm 111;
where an end portion of each connecting arm 111 away from the circuit board 11 is clamped between the connected connector 13 and busbar 12, each edge of the end portion of each connecting arm 111 away from the circuit board 11 is located in corresponding three plug parts 131 of the connector 13 and abuts against the three plug parts 131, and the end portion of the connecting arm 111 away from the circuit board 11 and the busbar 12 are welded.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A circuit board sampling structure, comprising:
a circuit board, wherein an edge of the circuit board is extended with a connecting arm;
busbars, wherein the busbar is provided with at least one plug hole; and
connectors, wherein a side of the connector is provided with at least one plug part, the plug part is plugged in the plug hole, and an end of the connecting arm away from the circuit board is clamped between the connector and the busbar.

2. The circuit board sampling structure according to claim 1, wherein
the plug part and the busbar are snap-fitted.

3. The circuit board sampling structure according to claim 2, wherein
an end of the plug part away from the connector is bent with a hook portion, and the hook portion is hooked on the surface of the busbar away from the connecting arm.

4. The circuit board sampling structure according to claim 3, wherein a distance between the hook portion and the connector is greater than or equal to thickness of the busbar.

5. The circuit board sampling structure according to any one of claims 1 to 4, wherein
there are multiple plug holes, one plug hole being plugged with at least one plug part.

6. The circuit board sampling structure according to claim 5, wherein
there are three plug holes, the three plug holes being distributed in a triangle.

7. The circuit board sampling structure according to claim 5, wherein
the end of the connecting arm away from the circuit board is located in a zone defined by the multiple plug holes, and the edge of the connecting arm abuts against the plug part.

8. The circuit board sampling structure according to any one of claims 1 to 7, wherein
the connecting arm and the busbar are welded.

9. The circuit board sampling structure according to any one of claims 1 to 8, wherein
at least a portion of the connecting arm is in a bent shape.

10. The circuit board sampling structure according to claim 9, wherein
an edge of the circuit board is provided with notches, and the connecting arm extends from inside the notch to the outside of the notch.

11. The circuit board sampling structure according to claim 10, wherein
an inner wall forming the notch comprises: a first inner wall, wherein the first inner wall is perpendicular to an extension direction of the edge, the connecting arm extends from the first inner wall, and the connecting arm bends in a direction perpendicular to the edge, wherein the bent connecting arm is in a bent shape.

12. A battery module, comprising:
battery cells; and
the circuit board sampling structure according to any one of claims 1 to 11, wherein busbars of the circuit board sampling structure are connected to the battery cells.

13. The battery module according to claim 12, wherein the battery module further comprises:
a first housing, wherein a cavity of the first housing is provided with the battery cells and the circuit board sampling structure.

14. A battery pack, comprising:
the battery modules according to claim 12 or 13.

15. The battery pack according to claim 14, wherein the battery pack further comprises:
a second housing, wherein a cavity of the second housing is provided with multiple battery modules.

16. An electric device, comprising:
the battery pack according to claim 14 or 15.
